# FASCICULE DE BREVET EUROPEEN

(11) **EP 0 484 188 B1**
(45) Date de publication et mention de la délivrance du brevet: **22.03.1995**
(21) Numéro de dépôt: 91402235.5
(22) Date de dépôt: 12.08.1991
(51) Int. Cl.: G06K 9/20, H04N 1/32

(54) **Procédé pour transmettre d'un poste émetteur à un poste récepteur un message comprenant des données relatives à la définition d'un objet ou service et des données descriptives de cet objet ou service et l'agencement d'un poste récepteur pour la mise en oeuvre de ce procédé**
Verfahren zum Übertragen einer Nachricht, welche Daten betreffend die Definition und Beschreibung eines Gegenstandes oder Dienstes enthält, von einer Sende- zu einer Empfangsstation sowie Anordnung einer dieses Verfahren anwendenden Empfangsstation
Method for transmitting, from a sending station to a receiving station, a message containing data relating to the definition of an object or service and descriptive data of such an object or service and arrangement of a receiving station for implementing the method

(30) Priorité: 13.08.1990 FR 9010301
(43) Date de publication de la demande: 06.05.1992
(73) Titulaire: Bensoussan, Georges Alfred, F-75007 Paris (FR)
(72) Inventeur: Fodor, Nicholas,Philippe,Charles, F-92210 Saint-Cloud (FR); Bensoussan, Georges,Alfred, F-75007 Paris (FR)
(74) Mandataire: Lemoyne, Didier

(56) Documents cités:
- JP-A- 2 002 461
- US-A- 4 566 127
- PROCEEDINS OF THE INTERNATIONAL CONFERENCE ON COMPUTER COMMUNICATION;26-29 SEPTEMBRE 1978, KYOTO, JP, NORTH-HOLLAND PUBLISHING CO., AMSTERDAM ETC.pages 565 - 569; H. KAIYOH ET AL.: 'A Character Recognition Communication System'

## Description

L'invention concerne un procédé pour transmettre depuis un poste émetteur à un poste récepteur un message comprenant des données relatives à la définition d'un objet ou service et des données descriptives de cet objet ou service et un agencement d'un poste récepteur pour la mise en oeuvre de ce procédé.

On connaît déjà des procédés et agencements de poste récepteur de ce type. Cependant ceux-ci ont pour inconvénient d'impliquer l'utilisation d'un matériel sophistiqué et ainsi coûteux, qui nécessite un traitement spécifique des données à transmettre.

En particulier, le brevet américain US-A-4 566 127 décrit un système dans lequel un lecteur optique de caractères est utilisé en vue du traitement, par une unité centrale, de l'information reçue par un télécopieur.

L'ordinateur central reconnaît des données transmises et les convertit en données pouvant être lues par l'ordinateur. Ces données lisible par l'ordinateur sont stockées en commun avec des données descriptives de l'information dans leur forme initiale reçue.

JP-A-2 002 461 décrit un système qui reçoit des informations par télécopie et envoie des informations par télécopie. Des informations reçues sont détectées et lues de l'ordinateur et de l'information souhaitée, stockée au préalable dans une mémoire (ROM), est transmise au demandeur.

L'invention a pour objectif de proposer un procédé et un agencement de poste récepteur qui ne présente plus les inconvénients susmentionnés.

Pour atteindre ce but, l'invention propose un procédé pour établir une corrélation, dans un système notamment de commercialisation de produits ou de services comprenant une pluralité de postes locaux (1) aptes, chacun, à offrir ou demander des produits ou des services, entre des postes qui offrent un produit ou service, et des postes qui demandent le même produit ou service, chaque poste local étant équipé d'un terminal de télécopie, procédé selon lequel on
- prévoit un poste central (2) de mise en corrélation des postes locaux offrant ou demandant un même produit ou service,
- prévoit dans le poste central un équipement de traitement de données comportant un dispositif de reconnaissance et de conversion (16,18) de données en données codées pouvant être lues par cet équipement,
- amène les postes locaux (1) à transmettre au poste central (2) des offres ou de demandes d'un produit ou d'un service sous forme d'un message comportant:
   - des données (a) d'identification de l'émetteur du message,
   - des données (c) relatives à la définition de la nature de l'objet ou de service,
   - des données (b) indicatrices de la nature du message indiquant s'il s'agit d'une offre ou d'une demande,
   - et des données (d) descriptives du produit ou du service offert ou demandé,
- amène l'équipement de traitement de données à reconnaître et convertir les données (a,b,c) définissant l'émetteur, la nature du message et la nature du produit ou service, en données pouvant être lues par cet équipement, à reconstituer et à stocker chaque message comportant ces données (a,b,c) pouvant être lues et les données descriptives (d) présentes dans leur forme initiale reçue,
- amène l'équipement de traitement de données
- à établir lesdites corrélations entre les postes locaux offrant et les postes locaux demandant un même produit ou service, par comparaison des données (c) de définition de la nature du message et de la nature du produit ou service,
- à établir après la constatation d'une possibilité de mise en corrélation de deux postes locaux, un message à transmettre à chacun des postes, qui comprend les données d'identification de l'autre poste local (a) de la nature du message (b) de l'autre poste, de la nature du produit ou service (c) et lesdites données descriptives (d) et,
- à transmettre par télécopie ce message à chacun des deux postes, en utilisant comme adresse de l'un les données (a) d'identification de l'émetteur figurant sur le message reçu de l'autre.

Selon une caractéristique avantageuse de l'invention, on prévoit pour chaque message à transmettre par télécopie au poste central (2), dans un poste local (1) sur le support (6) du message à transmettre une zone (a) d'inscription des données (a) relatives à l'origine du message, une zone (b) d'inscription des données (b) déterminant la nature du message et indiquant s'il s'agit d'une offre ou d'une demande, une zone d'inscription des données (c) définissant la nature du produit ou service offert ou demandé et une zone (d) d'inscription des données descriptives du produit ou service, et inscrit au moins dans les zones (c,d) d'inscription des données de définition et descriptives du produit ou service, les données en caractères d'écriture.

Selon une autre caractéristique avantageuse de l'invention, on sépare dans le poste central (2 en 15), les différentes zones d'inscription (a à d), soumet les données écrites en des caractères d'écriture autres que les données descriptives à l'opération de reconnaissance dans le dispositif (16), décode les données codées et reconstitue chaque message d'offre ou de demande sous forme d'une image électronique dans laquelle l'origine, la nature et le produit ou service, du message, sont identifiés et avantageusement indiqués en données ASCII et qui portent sous forme de données de télécopie non traitées les données descriptives (d).

De même, il est proposé un agencement pour la mise en oeuvre du procédé selon l'invention, comportant une pluralité de postes locaux (1) qui offrent des produits ou des services et une pluralité de postes locaux (1) qui demandent des produits ou services, chaque poste local étant équipé d'un terminal de télécopie relié à un réseau de transmission de données (3) et adapté pour établir des messages de télécopie à partir des données figurant sur un support, chaque message d'offre ou de demande précité comportant des données (a) d'identification de l'émetteur du message, des données (b) indicatrices de la nature du message indiquant s'il s'agit d'une offre ou d'une demande, des données (c) relatives à la définition du produit ou du service et des données (d) descriptives du produit ou du service offert ou demandé, et l'agencement comprenant un poste central (2) de mise en corrélation des postes locaux qui offrent un produit ou service, et des postes locaux qui demandent le même produit ou service, lequel poste central comprend un équipement de traitement de données (8,9) comportant:
- un dispositif (15) pour découper chaque message de télécopie reçu en partie contenant chacune l'un des types de données, précités (a à d);
- un dispositif de reconstitution (17) des messages après leur traitement par l'équipement de traitement (8,9) de données sous forme d'une image ou fiche électronique comportant des zones de données (a à d) de chaque message reçu, dans laquelle la zone de données descriptives (d) est l'image identique des données descriptives (d) reçues, tandis que les zones des données d'identification, des données indicatrices de la nature du message et des données relatives à la définition du produit ou du service comportent des données écrites dans le langage de l'équipement de traitement de données (8,9) de façon à être manipulables par celui-ci;
- un dispositif de reconnaissance et de conversion (16, 18) des données reçues en un langage autre que celui de l'équipement de traitement des données (8,9) en données du langage de cet équipement et adapté pour transmettre ces données au dispositif de reconstitution (17);
- un dispositif de gestion de base de données (10) adapté pour lire les messages d'offre et de demande reconstitués et de mettre en corrélation les messages d'offre et les messages de demande d'un même produit ou service et pour établir les messages de mise en corrélation destinés au poste offrant et au poste demandant portant les données (a,b,c,d) des messages respectivement du poste demandant et du poste offrant, et
- un dispositif de télécopie d'émission des messages de mise en corrélation.

L'invention sera mieux comprise, et d'autres buts, caractéristiques, détails et avantages de celle-ci apparaitront plus clairement au cours de la description explicative qui va suivre faite en référence aux dessins schématiques annexés donnés uniquement à titre d'exemple illustrant un mode de réalisation de l'invention et dans lesquels :
La figure 1 est une vue schématique d'un document portant un message destiné à être transmis par télécopie, selon la présente invention ;
La figure 2 illustre sous forme d'un schéma-bloc le procédé selon l'invention et l'agencement pour sa mise en oeuvre et ;
La figure 3 montre schématiquement une version différente d'un document porteur d'un message selon l'invention.

L'invention sera décrite ci-après dans son application à un système de commercialisation de produits ou services, comprenant une multitude de postes locaux 1 qui offrent et demandent un produit ou service, et un poste central 2 de mise en corrélation d'un ou des postes locaux qui offrent un produit ou service et un ou plusieurs postes locaux qui demandent ce même produit ou service. Chaque poste local 1 est relié au poste central 2 par un réseau téléphonique ou un réseau publique pour données, indiqué en 3. Chaque poste local est essentiellement formé par un terminal de télécopie qui est relié au réseau 3 par un MODEM 4. Chaque poste local peut ainsi transmettre par télécopie des messages au poste central et recevoir de ce dernier de tels messages.

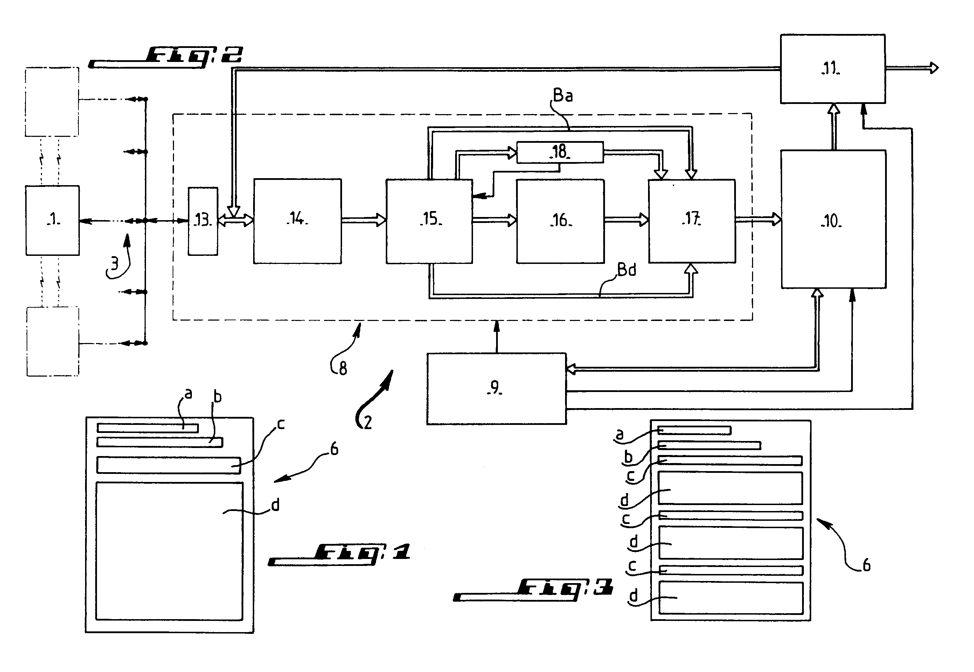

La figure 1 montre à titre d'exemple en 6 un support physique, notamment en papier, sur lequel le message est inscrit d'une manière particulière qui facilite la mise en oeuvre de l'invention. Dans l'exemple représenté, le support 6 présente quatre zones d'inscription spécifiques a à d. La zone a est réservée aux inscriptions concernant l'origine du message et identifiant par exemple par son numéro d'abonné le poste local émetteur du message et la date et l'heure de l'émission et l'arrivée de celui-ci. Ces inscriptions seront faites par le terminal lui-même, de façon connu en soi, en code ASCII. Dans la zone b sont inscrites les données qui indiquent la nature du message, c'est-à-dire s'il s'agit d'une offre ou d'une demande ainsi que le type de document utilisé. Ces données peuvent être inscrites dans la zone b sous forme codée. Par exemple une offre pourrait être symbolisée par un cercle blanc. Un cercle noir pourrait symboliser une demande. D'autres formes géométriques facilement détectables pourraient indiquer différents types de documents, tels que par exemple celui montré à la figure 3. La zone c est prévue pour l'inscription des données qui définissent le produit ou service offert ou demandé. Ces données sont inscrites dans cette zone c en caractères d'écriture. Le produit ou service pourrait être défini par un mot clé susceptible de le caractériser tel que par exemple son nom propre ou une dénomination commerciale. La zone d est réservée aux données descriptives du produit ou service offert ou demandé et peut par exemple comprendre les spécifications, le prix, l'emballage, le délai de livraison, le mode de paiement, des observations, des graphiques et les coordonnées de l'émetteur du message. Ces données descriptives sont écrites de toute manière appropriée et avantageusement en caractères d'écriture. Les inscriptions dans les zones c et d peuvent être faites par une machine à écrire ou même manuellement.

La figure 2 montre particulièrement l'agencement selon l'invention, du poste central 2. Celui-ci comprend essentiellement une carte électronique de télécopie 8 pilotée par un logiciel lancé depuis un ordinateur 9, un dispositif de stockage 10 de fiches, chacune établie pour un message d'offre ou de demande d'un produit ou service en provenance d'un poste local 1, ainsi qu'un dispositif émetteur 11 de message de télécopie aux postes locaux 1. Le dispositif 10 constitue un système de gestion de base de données.

La carte électronique 8 comprend à l'entrée, un dispositif du type MODEM 13 relié au réseau de transmission par télécopie 3. Les données de télécopie reçue sont ensuite acheminées à une mémoire non-volatile 14 telle qu'une mémoire de masse, par exemple un disque dur, qui stocke chaque message constituant une copie fidèle du document 6 qui a été introduite dans le terminal de télécopie. Sous la commande de l'ordinateur 9, chaque image électronique peut être transférée à un dispositif 15 adapté pour découper l'image en quatre tranches, chacune contenant une des quatre zones a à d. Les données de la tranche de zone c, qui ont été écrites sur le support 6 en caractères d'écriture sont transmises à un dispositif de reconnaissance des caractère d'écriture 16. Tout dispositif de reconnaissance d'écriture connu approprié pourrait être utilisé à cette fin, le cas échéant après traitement préalable des données de télécopie. On effectuera cependant avantageusement cette reconnaissance selon le logiciel qui est connu sous la dénomination OCR. Ce logiciel à même de reconnaître la piètre qualité d'un document télécopié offre la possibilité de traiter des images standardisées selon un procédé de traitement connu sous la dénomination TIFF dans le domaine de l'informatique, qui permet à des logiciels différents et travaillant sur des logiciels d'exploitation divers d'échanger des données graphiques. La conversion des données au format TIFF s'effectuera au sein du logiciel de pilotage de la carte de télécopie 8.

Le dispositif de reconnaissance de caractères d'écriture 16 effectue l'opération de reconnaissance des données d'écriture contenues dans le fichier TIFF. Cette opération consiste à transformer les données de caractères d'écriture en données codées ASCII, plus précisément en mots symbolisés par des codes ASCII. Ces données sont transférées à un dispositif 17 de reconstitution de l'image qui a été découpée en 15.

Le logiciel d'OCR permet aussi un contrôle d'erreurs à l'aide d'un algorithme de comparaison des mots reconnus avec un dictionnaire des produits ou services et des mots clé les plus souvent rencontrés. Ceci permet alors de rectifier une erreur de reconnaissance ou occassionnée par un parasite sur la ligne téléphonique par exemple sous forme d'une petite tâche sur la télécopie.

Les données inscrites dans la tranche de zone a qui indiquent l'identité de l'émetteur et les dates et l'heure du départ et de l'arrivée de la télécopie sont déjà codées en ASCII et sont donc transmises directement au dispositif de reconstitution 17 par le bus Ba. Les données de la tranche de zone b qui indiquent si le message est une offre ou une demande d'un produit ou d'un service, sont acheminées à un dispositif décodeur 18 qui les convertit en données également codées en ASCII et les transmet au dispositif de reconstitution 17. Enfin les données descriptives du produit ou service offert ou demandé et qui sont inscrites dans la tranche contenant la zone d sont acheminées sans aucun traitement de reconnaissance quelconque au dispositif de reconstitution 17, via le bus Bd.

Le dispositif de reconstitution 17 est adapté pour reconstituer le message reçu et traité de la manière qui vient d'être décrite, et réunit les quatre zones a à d dans lesquelles les données des zones a à c sont maintenant toutes codées en ASCII. Par contre les données descriptives de la zone d constituent toujours une copie fidèle des données inscrites dans la zone d .

Les fichiers reconstitués dans le dispositif 17 sont acheminés au dispositif de gestion de base de données 10.

Le rôle de cette dernière est d'établir de façon continue une corrélation entre les différents fichiers qu'il contient. Ainsi, une offre ou une demande d'un produit ou d'un service se verra corrélée par la base de données 10 avec une demande de ce même produit ou service. Dès qu'une corrélation aura été découverte par le système de base de données 10, elle sera immédiatement formalisée sous forme d'une fiche d'information qui sera émise automatiquement par télécopie par le dispositif 11 vers le ou les demandeurs sous forme d'un message contenant l'identité de l'offrant, la définition du produit ou service et l'image de la zone d des données descriptives, et aux offrants sous forme d'un message contenant l'identité du demandeur et la définition du produit ou service ainsi que l'image des données descriptives de celui-ci.

La figure 3 montre un autre type de document pour l'envoi simultané des offres et demandes de plusieurs produits ou services. Ce document porte à cette fin plusieurs zones c pour la définition des produits et services et plusieurs zones d pour la description de ceux-ci. Pour que le dispositif 15 puisse correctement découper l'image, on indique le type de document dans la zone b, comme cela a été énoncé pour haut. Cette information sera décodée par le dispositif 18 et celui-ci enverra un signal approprié au dispositif 15 désignant le découpage en tranches devant être effectué.

La description qui vient d'être faite de l'invention permet de comprendre le procédé de transmission de données par télécopie, conformément à l'invention, et la structure ainsi que le fonctionnement de l'agencement du poste central pour la mise en oeuvre de ce procédé.

Dans la description précédente, les différentes fonctions sont décrites comme étant exécutées par des dispositifs spécifiques. Ces fonctions pourraient avantageusement être mises en oeuvre par un système de traitement de données selon des logiciels appropriés.

Bien entendu, l'invention n'est pas limitée à l'application du procédé qui a été décrite à titre d'exemple seulement. Ainsi, l'invention est utilisable chaque fois qu'il s'agit de transmettre d'un poste à un autre un message contenant des informations qui doivent être traitées en fonction d'autres informations également contenues dans le message, mais qui doivent être reconnues pour que l'action ou l'opération qu'elles définissent puisse être exécutée.

D'autre part, tout autre moyen pour indiquer les données relatives à la définition de l'objet ou du service demandé ou offert peut être utilisé à la place des caractères d'écriture. Ainsi, on pourrait employer par exemple des codes à barres qui seront alors reconnus par le dispositif de reconnaissance du poste récepteur. Par ce moyen, l'émetteur d'un message aura la faculté soit d'écrire les données destinées à être reconnues par le dispositif de reconnaissance, soit de coller sur la feuille destinée à être envoyée, une étiquette par exemple autocollante portant les codes à barres. De telles étiquettes pourraient être fournies aux utilisateurs de l'agencement selon l'invention par l'organisme exploitant cet agencement. Bien entendu, les codes à barres se trouveront dans les zones réservées aux caractères d'écriture dans l'agencement représenté aux figures. Il serait également possible, sans sortir du cadre de l'invention, d'utiliser simultanément des caractères d'écriture et des codes à barres.

## Revendications

1. Procédé pour établir une corrélation, dans un système notamment de commercialisation de produits ou de services comprenant une pluralité de postes locaux (1) aptes, chacun, à offrir ou demander des produits ou des services, entre des postes qui offrent un produit ou service et des postes qui demandent le même produit ou service, chaque poste local étant équipé d'un terminal de télécopie, procédé selon lequel on
- prévoit un poste central (2) de mise en corrélation des postes locaux offrant ou demandant un même produit ou service,
- prévoit dans le poste central un équipement de traitement de données comportant un dispositif de reconnaissance et de conversion (16,18) de données en données codées pouvant être lues par cet équipement,
- amène les postes locaux (1) à transmettre au poste central (2) des offres ou des demandes d'un produit ou d'un service sous forme d'un message comportant:
- des données (a) d'identification de l'émetteur du message,
- des données (c) relatives à la définition de la nature de l'objet ou de service,
- des données (b) indicatrices de la nature du message indiquant s'il s'agit d'une offre ou d'une demande,
- et des données (d) descriptives du produit ou du service offert ou demandé,
- amène l'équipement de traitement de données à reconnaître et convertir les données (a,b,c) définissant l'émetteur, la nature du message et la nature du produit ou service, en données pouvant être lues par cet équipement, à reconstituer et à stocker chaque message comportant ces données (a,b,c) pouvant être lues et les données descriptives (d) présentes dans leur forme initiale reçue,
- amène l'équipement de traitement de données
- à établir lesdites corrélations entre les postes locaux offrant et les postes locaux demandant un même produit ou service, par comparaison des données (c) de définition de la nature du message et de la nature du produit ou service,
- à établir après la constatation d'une possibilité de mise en corrélation de deux postes locaux, un message à transmettre à chacun des postes, qui comprend les données d'identification de l'autre poste local (a) de la nature du message (b) de l'autre poste, de la nature du produit ou service (c) et lesdites données descriptives (d) et
- à transmettre par télécopie ce message à chacun des deux postes, en utilisant comme adresse de l'un les données (a) d'identification de l'émetteur figurant sur le message reçu de l'autre.

2. Procédé selon la revendication 1, caractérisé en ce que l'on prévoit pour chaque message à transmettre par télécopie au poste central (2), dans un poste local (1) sur le support (6) du message à transmettre une zone (a) d'inscription des données (a) relatives à l'origine du message, une zone (b) d'inscription des données (b) déterminant la nature du message et indiquant s'il s'agit d'une offre ou d'une demande, une zone d'inscription des données (c) définissant la nature du produit ou service offert ou demandé et une zone (d) d'inscription des données descriptives du produit ou service, et inscrit au moins dans les zones (c,d) d'inscription des données de définition et descriptives du produit ou service, les données en caractères d'écriture.

3. Procédé selon la revendication 2, caractérisé en ce que les données concernant l'origine du message, qui définissent le poste local émetteur (1) et, le cas échéant, la date et l'heure de l'émission, sont inscrites dans la zone (a) réservée à cette fin, par le terminal de télécopie, avantageusement en code ASCII.

4. Procédé selon la revendication 3, caractérisé en ce que les données indiquant s'il s'agit d'une offre ou d'une demande sont inscrites dans la zone (b) réservée à cette fin, en un code facilement décodable, avantageusement constitué par des formes géométriques.

5. Procédé selon la revendication 4, caractérisé en ce que l'on sépare dans le poste central (2 en 15), les différentes zones d'inscription (a à d), soumet les données écrites en des caractères d'écriture autres que les données descriptives à l'opération de reconnaissance dans le dispositif de reconnaissance et de conversion (16), décode les données codées et reconstitue chaque message d'offre ou de demande sous forme d'une image électronique dans laquelle l'origine, la nature et le produit ou service, du message, sont identifiés et avantageusement indiqués en données ASCII et qui portent sous forme de données de télécopie non traitées les données descriptives (d).

6. Agencement pour la mise en oeuvre du procédé selon l'une des revendications 1 à 5, comportant une pluralité de postes locaux (1) qui offrent des produits ou des services et une pluralité de postes locaux (1) qui demandent des produits ou services, chaque poste local étant équipé d'un terminal de télécopie relié à un réseau de transmission de données (3) et adapté pour établir des messages de télécopie à partir des données figurant sur un support, chaque message d'offre ou de demande précité comportant des données (a) d'identification de l'émetteur du message, des données (b) indicatrices de la nature du message indiquant s'il s'agit d'une offre ou d'une demande, des données (c) relatives à la définition du produit ou du service et des données (d) descriptives du produit ou du service offert ou demandé, et l'agencement comprenant un poste central (2) de mise en corrélation des postes locaux qui offrent un produit ou service, et des postes locaux qui demandent le même produit ou service, lequel poste central comprend un équipement de traitement de données (8,9) comportant:
- un dispositif (15) pour découper chaque message de télécopie reçu en partie contenant chacune l'un des types de données, précités (a à d);
- un dispositif de reconstitution (17) des messages après leur traitement par l'équipement de traitement (8,9) de données sous forme d'une image ou fiche électronique comportant des zones de données (a à d) de chaque message reçu, dans laquelle la zone de données descriptives (d) est l'image identique des données descriptives (d) reçues, tandis que les zones des données d'identification (a), des données indicatrices de la nature du message (b) et des données relatives à la définition du produit ou du service (c) comportent des données écrites dans le langage de l'équipement de traitement de données (8,9) de façon à être manipulables par celui-ci;
- un dispositif de reconnaissance et de conversion (16, 18) des données reçues en un langage autre que celui de l'équipement de traitement des données (8,9) en données du langage de cet équipement et adapté pour transmettre ces données au dispositif de reconstitution (17);
- un dispositif de gestion de base de données (10) adapté pour lire les messages d'offre et de demande reconstitués et de mettre en corrélation les messages d'offre et les messages de demande d'un même produit ou service et pour établir les messages de mise en corrélation destinés au poste offrant et au poste demandant portant les données (a,b,c,d) des messages respectivement du poste demandant et du poste offrant, et
- un dispositif de télécopie d'émission des messages de mise en corrélation.

7. Agencement selon la revendication 6, caractérisé en ce que le dispositif de reconnaissance et de conversion (16,17) comprend un dispositif de reconnaissance d'écriture, tel que des écritures manuscrites ou des codes-barres et un dispositif décodeur (18) pour le décodage des données se présentant sous une forme codée.

8. Agencement selon la revendication 7, caractérisé en ce que le dispositif de reconnaissance (16) et le dispositif décodeur (18) sont adaptés pour transformer les données à traiter en données ASCII.

## Patentansprüche

1. Verfahren zur Herstellung einer Wechselbeziehung in einer Anordnung, insbesondere zur Vermarktung von Waren oder Dienstleistungen, mit einer Vielzahl von lokalen Stationen (1), deren jede Waren oder Dienstleistungen anbietet oder nachfragt, zwischen Stationen, welche eine Ware oder eine Dienstleistung anbieten und Stationen, welche eine derartige Ware oder Dienstleistung nachfragen, und bei dem jede lokale Station mit einem Fernkopiergerät versehen ist, wobei gemäß dem Verfahren
- eine zentrale Station (2) vorgesehen wird, um eine Wechselbeziehung zwischen den lokalen Stationen herzustellen, welche dieselbe Ware oder Dienstleistung anbieten oder nachfragen,
- in der zentralen Station eine Datenverarbeitungsanlage vorgesehen wird, die eine Anordnung aufweist zur Erkennung und Umwandlung (16, 18) von Daten in codierte Daten, die von dieser Anlage gelesen werden können,
- die lokalen Stationen (1) veranlaßt werden, der zentralen Station (2) Angebote oder Nachfragen einer Ware oder Dienstleistung in Form einer Nachricht zu übermitteln, die enthält:
- Daten (a) zur Identifizierung des Absenders der Nachricht,
- Daten (c) zur Definition der Art der Ware oder der Dienstleistung,
- Daten (b) bezüglich der Art der Nachricht, die erkennen lassen, ob es sich um ein Angebot oder eine Nachfrage handelt,
- und Daten (d), die die angebotene oder nachgefragte Ware oder Dienstleistung beschreiben,
- die Datenverarbeitungsanlage veranlaßt wird, die Daten (a, b, c), welche den Absender, die Art der Nachricht und die Art der Ware oder Dienstleistung definieren, zu erkennen und umzuwandeln in Daten, die von dieser Anlage gelesen werden können, jede Nachricht, welche diese lesbaren Daten (a, b, c) enthält und die beschreibenden Daten (d) in ihrer ursprünglich empfangenen Form, wieder herzustellen und zu speichern,
- die Datenverarbeitungsanlage veranlaßt wird,
- die Wechselbeziehungen herzustellen zwischen denjenigen lokalen Stationen, welche dieselbe Ware oder Dienstleistung anbieten und nachfragen durch Vergleich der Daten (c), welche die Art der Nachricht und die Art der Ware oder Dienstleistung definieren,
- eine Nachricht zu erzeugen nach Feststellung der Möglichkeit einer bestehenden Wechselbeziehung zwischen zwei lokalen Stationen, welche jeder dieser Stationen übermittelt wird, welche die Daten (a) zur Identifikation der anderen lokalen Station enthält sowie die Daten (b) der Art der Nachricht der anderen Station, die Daten (c) der Art der Waren oder Dienstleistung und die beschreibenden Daten (d),
- diese Nachricht mittels Fernkopie übermittelt wird an jede der beiden Stationen unter Verwendung einer der Daten (a) zur Identifikation des Absenders als Adresse in der der anderen Station übermittelten Nachricht.

2. Verfahren nach Anspruch 1, dadurch gekennzeichnet, daß in jeder mittels Fernkopie der zentralen Station (2) übermittelten Nachricht in der lokalen Station (1) auf dem Nachrichtenträger (6) ein zu übermittelnder Bereich (a) vorgesehen wird zum Einschreiben von Daten (a) bezüglich des Ursprungs der Nachricht, ein Bereich (b) vorgesehen wird zum Einschreiben von Daten (b), welche die Art der Nachricht bestimmen und die anzeigen, ob es sich um ein Angebot oder eine Nachfrage handelt, ein Bereich (c) vorgesehen wird zum Einschreiben von Daten (c), welche die Art der angebotenen oder nachgefragten Ware oder Dienstleistung definieren und ein Bereich (d) vorgesehen wird zum Einschreiben von Daten, welche die Ware oder Dienstleistung beschreiben, wobei zumindest in den Bereichen (c, d) zum Einschreiben der Daten, die die Ware oder Dienstleistung definieren und beschreiben, Daten als Schriftbuchstaben eingeschrieben werden.

3. Verfahren nach Anspruch 2, dadurch gekennzeichnet, daß die Daten, welche den Ursprung der Nachricht betreffen, welche die lokale Absendestation (1) definieren und gegebenenfalls Datum und Stunde der Sendung, in den zu diesem Zweck vorgesehenen Bereich (a) eingeschrieben werden vom Fernkopiergerät und vorzugsweise im ASCII-Code.

4. Verfahren nach Anspruch 3, dadurch gekennzeichnet, daß die Daten, welche anzeigen, ob es sich um ein Angebot oder eine Nachfrage handelt, in den zu diesem Zweck vorgesehenen Bereich (b) eingeschrieben werden, in einem leicht zu entschlüsselnden Code, der vorteilhafterweise aus geometrischen Figuren besteht.

5. Verfahren nach Anspruch 4, dadurch gekennzeichnet, daß in der zentralen Station (2 bei 15) die verschiedenen Einschreibbereiche (a bis d) getrennt werden, daß die in Schriftbuchstaben geschriebenen Daten mit Ausnahme der beschreibenden Daten dem Erkennungsverfahren in der Vorrichtung zur Erkennung und Umwandlung (16) unterworfen werden, daß die codierten Daten decodiert werden, daß jede Nachricht bezüglich eines Angebots oder einer Nachfrage in Form eines elektronischen Bildes wieder hergestellt wird, bei dem der Ursprung, die Art und die Ware oder Dienstleistung in der Nachricht identifiziert werden und vorteilhafterweise als ASCII-Daten angezeigt werden, wobei die beschreibenden Daten (d) als unbehandelte Fernkopiedaten vorliegen.

6. Vorrichtung zur Durchführung des Verfahrens nach einem der Ansprüche 1 bis 5, mit einer Vielzahl von lokalen Stationen (1), welche Waren oder Dienstleistungen anbieten und einer Vielzahl von lokalen Stationen (1), welche Waren oder Dienstleistungen nachfragen, wobei jede lokale Station mit einem Fernkopiergerät versehen ist, das mit einem Datenübertragungsnetz (3) verbunden ist und das in der Lage ist, Fernkopie-Nachrichten zu erstellen, ausgehend von Daten auf einem Träger, wobei jede dieser Angebots- oder Nachfragenachrichten Daten (a) enthält zur Identifikation des Absenders der Nachricht, Daten (b) enthält hinsichtlich der Art der Nachricht, welche anzeigen, ob es sich um ein Angebot oder um eine Nachfrage handelt, Daten (c) enthält, bezüglich der Definition der Ware oder Dienstleistung und Daten (d) enthält, welche die angebotene oder nachgefragte Ware oder Dienstleistung beschreiben, wobei die Vorrichtung eine zentrale Station (2) aufweist zur Herstellung von Wechselbeziehungen zwischen lokalen Stationen, die eine Ware oder Dienstleistung anbieten und lokalen Stationen, die diese Ware oder Dienstleistung nachfragen, wobei die zentrale Station eine Datenverarbeitungsanlage (8, 9) aufweist mit:
- einer Anordnung (15) zur Unterteilung einer jeden mittels Fernkopie erhaltenen Nachricht in Abschnitte, deren jeder eine der oben genannten Datentypen (a bis d) enthält,
- einer Anordnung zur Wiederherstellung (17) der Nachrichten, nach deren Verarbeitung durch die Datenverarbeitungsanlage (8, 9) in Form eines Bildes oder einer elektronischen Markierung mit Datenbereichen (a bis d) für jede empfangene Nachricht, wobei der beschreibende Datenbereich (d) das identische Bild der empfangenen beschreibenden Daten (d) ist, während die Bereiche der Identifizierungsdaten (a) der Daten, welche die Art der Nachricht beschreiben (b) und der Daten bezüglich der Definition der Ware oder der Dienstleistung (c) Daten enthalten, welche in der Sprache der Datenverarbeitungsanlage (8, 9) geschrieben sind, so daß sie von dieser bearbeitet werden können,
- einer Anordnung zur Erkennung und Umwandlung (16, 18) von empfangenen Daten in einer anderen Sprache als derjenigen der Datenverarbeitungsanlage (8, 9) in Daten der Sprache dieser Anlage, welche diese Daten der Wiederherstellungsanordnung (17) zuführt,
- einer Anordnung zur Steuerung der Daten (10), die in der Lage ist, die wieder hergestellten Angebots- oder Nachfragenachrichten zu lesen und eine Wechselbeziehung herzustellen zwischen den Angebotsnachrichten und den Nachfragenachrichten für dieselbe Ware oder Dienstleistung, um eine Wechselbeziehungsnachricht herzustellen, die für die Anbieterstation und die Nachfragestation bestimmt ist, die die Daten (a, b, c, d) der Nachrichten der Nachfragestation bzw. der Anbieterstation trägt und
- einer Anordnung zum Absenden von Fernkopien mit diesen Wechselbeziehungsnachrichten.

7. Vorrichtung nach Anspruch 6, dadurch gekennzeichnet, daß die Anordnung zur Erkennung und Umwandlung (16, 17) eine Anordnung zur Erkennung von Schrift aufweist, wie z.B. Handschriften oder Strichcodes und eine Decodieranordnung (18) aufweist zur Decodierung der in codierter Form vorliegenden Daten.

8. Vorrichtung nach Anspruch 7, dadurch gekennzeichnet, daß die Erkennungsanordnung (16) und die Decodieranordnung (18) in der Lage sind, die zu verarbeitenden Daten in ASCII-Daten umzuwandeln.

## Claims

1. Method to set up a correlation, in a system notably for the marketing of goods or services, comprising a plurality of local stations (1), each capable of proposing or requesting the supply of goods or services, between stations that propose the supply of a product or service and stations that request the same product or service, each local station being equipped with a fax terminal, said method consisting in:
- providing for a central station (2) for the correlating of the local stations that propose or request the supply of one and the same product or service,
- providing, in the central station, for a data-processing machine comprising a device (16, 18) for the recognition of data elements and the conversion of these data elements into encoded data elements capable of being read by this machine,
- making the local stations (1) send the central station (2) proposals or requests for the supply of a product or service in the form of a message comprising:
* data elements (a) to identify the sender of the message,
* data elements (c) relating to the definition of the nature of the object or service,
* data elements (b) that indicate the nature of the message, indicating whether it is a proposal to supply or a request for a supply,
* and data elements (d) describing the product or service whose supply is proposed or requested,
- making the data-processing machine recognize the data elements (a, b, c) defining the sender, the nature of the message and the nature of the product or service and to convert these data elements into data elements that can be read by this machine, reconstitute and store each message comprising these data elements (a, b, c) capable of being read and the descriptive data elements (d) present in their initial received form,
- making the data-processing machine:
* set up said correlation between the local stations proposing the supply and local stations requesting the supply of one and the same product or service, by comparing the data elements (c) defining the nature of the message and the nature of the product or service,
* prepare, after a possibility of correlating two local stations has been noted, a message to be transmitted to each of the stations, said message including the data elements for identifying the other local station (a), the nature of the message (b) from the other station, the nature of the product or service (c) and said descriptive data elements (d) and
* transmit this message by fax to each of the two stations by using, as the address of one of stations, the data elements (a) for identifying the sender contained in the message received from the other station.

2. Method according to claim 1 characterized in that, for each message to be transmitted by fax to the central station (2), there is provided, in a local station (1), on the medium (6) carrying the message to be transmitted, a zone (a) for the writing of the data elements (a) relating to the origin of the message, a zone (b) for the writing of the data elements (b) determining the nature of the message and indicating that it is a proposal to supply or a request for a supply, a zone for the writing of the data elements (c) defining the nature of the product or service whose supply is proposed or requested and a zone (d) for the writing of the data elements describing the product or service and in that, at least in the zones (c, d) for the writing of the data elements defining and describing the product or service, the data elements are written in conventional script.

3. Method according to claim 2, characterized in that the data elements relating to the origin of the message, which define the sending local station and, as the case may be, the date and time of the transmission, are recorded in the zone (a), reserved for this purpose, by the fax terminal, advantageously in ASCII code.

4. Method according to claim 3, characterized in that the data elements indicating that the message is a proposal to supply or a request for a supply are written in the zone (b) reserved for this purpose, in an easily decodable code, advantageously constituted by geometrical shapes.

5. Method according to claim 4, characterized in that the different writing zones (a to d) are separated in the central station (2 in 15), the data elements written in conventional script other than the descriptive data are subjected to the operation of recognition in the recognition and conversion device (16), the encoded data elements are decoded and each message proposing or requesting a supply is reconstituted in the form of an electronic image in which the origin, nature and product or service to which the message relates are identified and advantageously indicated in ASCII code, said electronic image carrying the descriptive data elements (d) in the form of unprocessed fax data.

6. Arrangement for the implementation of the method according to one of the claims 1 to 5, comprising a plurality of local stations (1) that propose the supply of goods or services and a plurality of local stations (1) that request the supply of goods or services, each local station being equipped with a fax terminal connected to a data transmission network (3) and adapted to the preparation of fax messages on the basis of the data elements contained in a medium, each above-mentioned message that is a proposal to supply or a request for a supply comprising data elements (a) for the identification of the sender of the message, data elements (b) that indicate the nature of the message indicating whether it is a proposal to supply or a request for a supply, data elements (c) relating to the definition of the product or service and data elements (d) describing the product or the service whose supply is proposed or requested, the arrangement comprising a central station (2) for the correlation of the local stations that propose the supply of a product or service, and local stations that request the supply of the same product or service, wherein said central station includes a data-processing machine comprising:
- a device to divide each fax message received into parts each containing one of the above-mentioned types of data (a to d);
- a device for the reconstitution of the messages after their processing by the data-processing machine in the form of an electronic image or file comprising data zones (a to d) of each message received, in which the zone of descriptive data elements (d) is the identical image of the descriptive data elements (d) received while the zones of the identification data (a), the data indicating the nature of the message (b) and the data relating to the definition of the product or service (c) comprise data elements written in the language of the data-processing machine so that they can be handled by this machine;
- a device for the recognition of the data elements received in a language other than the language of the data-processing machine and for the conversion of these data elements into data elements in the language of this machine and adapted to transmitting these data elements to the reconstitution device;
- a data-base management device adapted to the reading of the reconstituted messages that propose and request a supply and to the correlating of the messages that propose the supply and the messages that request the supply of one and the same product or service and to the preparing of the correlation messages intended for the supply-proposing station and supply-requesting station, said correlation carrying the data elements (a,b,c,d) of the messages respectively from the supply-requesting station and the supply-proposing station, and
- a fax device for the transmission of the correlating messages.

7. Arrangement according to claim 6, characterized in that the recognition and conversion device comprises a device for the recognition of conventional script such as handwriting or bar codes and a decoding device for the decoding of the data elements that are in an encoded form.

8. Arrangement according to claim 7, characterized in that the recognition device and the decoder device are adapted to converting the data to be processed into ASCII data elements.
